# EUROPÄISCHE PATENTSCHRIFT

(11) **EP 3 724 685 B1**
(45) Veröffentlichungstag und Bekanntmachung des Hinweises auf die Patenterteilung: **24.09.2025**
(21) Anmeldenummer: 18804314.5
(22) Anmeldetag: 16.11.2018
(51) Int. Cl.: G01S 7/481, G01S 7/4863, G01S 17/89, G01S 7/483

(54) **VERFAHREN ZUR VERBESSERTEN NAH- UND FERNDETEKTION EINER LIDAR EMPFANGSEINHEIT**
METHOD FOR THE IMPROVED NEAR AND REMOTE DETECTION OF A LIDAR RECEIVING UNIT
PROCÉDÉ DE DÉTECTION RAPPROCHÉE ET À DISTANCE AMÉLIORÉE D'UNE UNITÉ DE RÉCEPTION LIDAR

(30) Priorität: 15.12.2017 DE 102017222969
(43) Veröffentlichungstag der Anmeldung: 21.10.2020
(73) Patentinhaber: MicroVision, Inc., Redmond, WA 98052 (US)
(72) Erfinder: BEUSCHEL, Ralf, 88239 Wangen (DE); KIEHN, Michael, 22143 Hamburg (DE)
(74) Vertreter: RGTH
(86) Internationale Anmeldenummer: PCT/EP2018/081592
(87) Internationale Veröffentlichungsnummer: WO 2019/115149

(56) Entgegenhaltungen:
- US-A1- 2010 051 836
- US-A1- 2012 242 972
- US-A1- 2017 176 575

## Beschreibung

Die Erfindung betrifft ein Verfahren zur verbesserten Nah- und Ferndetektion einer LIDAR Empfangseinheit für Kraftfahrzeuge.

Solche LIDAR Empfangseinheiten sind beispielsweise für LIDAR Messsysteme gemäß der Schrift WO 2017 081 294 bekannt. Dieses LIDAR Messsystem weist eine LIDAR Sendeeinheit sowie eine LIDAR Empfangseinheit auf. Emitterelemente der LIDAR Sendeeinheit senden Lichtpulse aus, die eine Sendeoptik durchlaufen und an einem Objekt reflektiert werden. Ein reflektierter Lichtpuls wird über eine Empfangsoptik auf Sensorelemente der Empfangseinheit gebündelt, sodass dieser detektiert werden kann. Anhand der Laufzeit des Lichtpulses kann der Abstand des Objekts zu dem LIDAR Messsystem bestimmt werden. Aufgrund verschiedener Effekte können mehrere nacheinander von demselben Emitterelement versendete Laserpulse an unterschiedlichen Stellen an der Empfangseinheit auftreffen. Dies ist beispielsweise durch einen Wechsel von einer Nahfeldmessung, bei der das Objekt einen geringen Abstand zum LIDAR Messsystem aufweist, zu Fernfeldmessung, bei der das Objekt einen größeren Abstand zum LIDAR Messsystem aufweist, der Fall. Letztlich ist dies bedingt durch den räumlichen Aufbau eines solchen LIDAR Messsystem mit Empfangseinheit und Sendeeinheit in der Focal Plane Array Konfiguration, also der Anordnung der Emitterelemente und der Sensorelemente in einer Ebene sowie einer Anordnung im Brennpunkt einer jeweiligen Optik. Bei der Focal Plane Array Konfiguration werden keine Bauteile vermieden, die eine Beweglichkeit in das des LIDAR Messsystems oder dessen Komponenten einbringen. Durch die örtliche Verschiebung des eintreffenden Laserpulses auf der Empfangseinheit kann eine Detektion des Laserlichts verschlechtert werden. US 2010/0051836 A1 offenbart eine Vorrichtung zum Erstellen eines Tiefenbildes. US 2017/0176575 A1 beschreibt ein Verfahren zum Messen des Abstandes zu einem Objekt.

Es ist die Aufgabe der vorliegenden Erfindung ein Verfahren bereitzustellen, bei dem die Nah- und Ferndetektion von Objekten bei einer LIDAR-Empfangseinheit sowie eines LIDAR-Messsystems verbessert wird.

Die Aufgabe wird gelöst durch ein Verfahren gemäß dem Patentanspruch 1.

Das Verfahren ist dabei besonders für eine LIDAR Empfangseinheit gemäß den nachfolgenden Ausführungen geeignet. Die LIDAR Empfangseinheit ist normalerweise Bestandteil eines LIDAR Messsystems. Dabei ist das LIDAR Messsystem besonders für ein Kraftfahrtzeug geeignet. Günstigerweise werden mehrere gleichartige LIDAR Messsysteme an einem Kraftfahrzeug verbaut, um die gesamte Umgebung des Kraftfahrzeugs zu überwachen.

Das LIDAR Messsystem weist unter anderem eine LIDAR Sendeeinheit, eine Sendeoptik sowie eine LIDAR Empfangseinheit und eine Empfangsoptik auf. Zudem ist das LIDAR Messsystem günstigerweise mit einer Elektronik ausgestattet, die beispielsweise eine Auswerteeinheit zur Auswertung der ermittelten Messdaten ermöglicht und mit weiteren Systemen eines Kraftfahrzeugs zur Übertragung von Daten kommunizieren kann. Insbesondere weist das LIDAR Messsystem genau zwei Einheiten auf, eine für die Sensorelemente und eine für die Emitterelemente auf.

Die Sendeeinheit weist erfindungsgemäß mehrere Emitterelemente zum Aussenden von Laserpulsen auf, wobei die Empfangseinheit demgegenüber mehrere Sensorelemente zur Detektion der Laserpulse aufweist. Die Emitterelemente sind günstigerweise als Vertical Cavity surface emitting laser, VCSEL, ausgebildet, wohingegen die Sensorelemente vorzugsweise durch Single Photon Avalanche Diode, SPAD, ausgebildet sind.

Die Sensorelemente weisen im Normalfall eine kleinere Oberfläche auf als ein Emitterelement sowie dessen auf die Empfangseinheit projizierter Laserpuls. Von daher können mehrere Sensorelemente von einem Laserpuls beleuchtet sein. Zudem kann das eintreffende Laserlicht aufgrund verschiedener Effekte an unterschiedlichen Stellen der Empfangseinheit auftreffen. Diese tatsächliche Position wird als eine Verschiebung gegenüber einer optimalen Referenzposition beschrieben, bei der das Laserlicht bei optimalen Bedingungen und nach einer Reflektion an einem Objekt in großem Abstand auf der Empfangseinheit auftrifft. Dabei kann die Verschiebung eine Größendimension von einem oder mehreren Sensorelementen aufweisen.

Von daher ist die Anzahl der Sensorelemente an der Empfangseinheit günstigerweise größer als die Anzahl der Emitterelemente der Sendeeinheit. Insbesondere sind einem Emitterelement gedanklich mehrere Sensorelemente zugewiesen, wobei jedes der Sensorelemente potentiell einen Laserpuls des Emitterelements empfangen kann.

Die Sensorelemente der Makrozellen sind günstiger Weise alle von derselben Art, d.h. es sind beispielsweise ausschließlich dieselben SPAD verbaut. Entsprechendes ist auch für die Emitterelemente der Sendeeinheit von Vorteil.

Die Emitterelemente und die Sensorelemente sind günstigerweise jeweils auf einen Chip auf der Sendeeinheit bzw. der Empfangseinheit angeordnet, die auch Emitterchip und Sensorchip genannt werden. Ein solcher Chip stellt im Wesentlichen eine ebene Fläche bereit. Diese Ebene bzw. die darauf angeordneten Emitterelemente und Sensorelemente werden dann an dem LIDAR Messsystem in einem Brennpunkt einer jeweiligen Optik angeordnet. Diese Anordnung in einer Ebene und im Brennpunkt wird auch als Focal Plane Array Konfiguration, FPA, bezeichnet. Mit besonderem Vorteil sind jeweils alle Emitterelemente an der Sendeeinheit und alle Sensorelemente an der Empfangseinheit ausgebildet. Die Sendeeinheit und die Empfangseinheit sind erfindungsgemäß jeweils in einer Focal Plane Array - Konfiguration angeordnet.

Das LIDAR Messsystems mit Sendeeinheit und Empfangseinheit in FPA Konfiguration ist vorzugsweise statisch ausgebildet. Mit anderen Worten sind die Komponenten fest verbaut, sodass das LIDAR Messsystem und dessen Komponenten keine Relativbewegung ausführen können. Dies macht das LIDAR Messsystem kostengünstig, robust und kompakt. Insbesondere ist auch das LIDAR Messsystem statisch an einem Kraftfahrzeug angeordnet.

Die Sensorelemente sind an der Empfangseinheit erfindungsgemäß in Makrozellen organisiert. Erfindungsgemäß weist jede Makrozelle mehrere Sensorelemente, insbesondere zumindest zwei Sensorelemente, auf. Mit Vorteil können es auch weit mehr Sensorelemente sein. Die Anzahl der Sensorelemente beträgt mit Vorteil zwischen fünf und vierzig Stück.

Erfindungsgemäß sind die Makrozellen jeweils einem Emitterelement der Sendeeinheit zugeordnet. Diese Zuweisung erfolgt im Wesentlichen durch die Optiken. Ein Emitterelement und ein Sensorelement werden jeweils durch die zugehörige Optik auf einen bestimmten Raumwinkel abgebildet, sodass das Emitterelement und das Sensorelement diesen Raumwinkel betrachten. Das Sensorelement, welches denselben Raumwinkel betrachtet wie ein Emitterelement ist diesem entsprechend zugewiesen. Dementsprechend ist eine Makrozelle über dessen Sensorelemente einem Emitterelement zugewiesen.

Die Emitterelemente weisen an der Sendeeinheit vorzugsweise eine flächige Konfiguration auf. Die Emitterelemente sind vorzugsweise in einer Matrixstruktur an dem Sendechip der Sendeeinheit angeordnet, beispielweise in Spalten-Zeilen-Form oder in einem Hexagonalen Muster. Die Makrozellen sind an der Empfangseinheit entsprechend in derselben räumlichen Konfiguration angeordnet, sodass ein von einem Emitterelement emittierter Laserpuls auf die zugehörige Makrozelle abbildet.

Das LIDAR Messsystem arbeitet vorzugsweise nach dem Scanning Verfahren. Dementsprechend wird ein Messvorgang zunächst für eine Auswahl an Emitterelement-Sensorelementpaarungen ausgeführt. Anschließend wird der Messvorgang für eine weitere Auswahl an Emitterelement-Sensorelementpaarungen durchgeführt. Beispielsweise wird ein erster Messvorgang für eine Zeile oder Reihe von Emitterelementen und deren zugehörige Sensorelemente durchgeführt. Anschließend wird derselbe Messvorgang für eine andere Zeile oder Reihe durchgeführt. Dadurch werden Sensorelemente, die den eigentlich zugewiesenen Sensorelementen benachbart angeordnet sind, nicht durch einen anderen Messvorgang beeinflusst.

Die Sensorelemente einer Makrozelle sind an der Empfangseinheit mit zumindest einer Ausleseeinheit verbunden. Die Ausleseeinheit kann beispielsweise durch einen Time to Digital Converter, auch TDC genannt, ausgebildet sein. Dieser liest die Messwerte der Sensorelemente aus und speichert diese in ein Speicherelement, welches vorzugsweise ein Histogramm abbildet. Ein Messvorgang erfolgt vorzugsweise gemäß dem TCSPC Verfahren, Time Correlated Single Photon Counting.

Ein Messzyklus beginnt im Wesentlichen mit dem Aussenden eines Lichtpulses durch ein Emitterelement der Sendeeinheit und endet im Wesentlichen mit dem Ablauf der Messdauer. Diese Messdauer entspricht der Zeit, die ein ausgesendeter Lichtpuls benötigt, um bis zur maximalen Messreichweite und zurück zu gelangen. Dieser Lichtpuls durchläuft die Sendeoptik, welche den Lichtpuls in den zugehörigen Raumwinkel lenkt. Gegebenenfalls wird der Lichtpuls an einem Objekt reflektiert und trifft anschließend über die Empfangsoptik auf ein Sensorelement.

Beispielsweise wird der Zeitpunkt des Eintreffens des Lichtpulses wird als digitaler Wert in das Histogramm des Speicherelements geschrieben. Jedes detektierte Photon wird in diesem Histogramm vermerkt. Dieser Messzyklus kann je nach Konfiguration des Messsystems und der Sende- und Empfangseinheit für eine Messung ein Mal oder Mehrfach durchlaufen werden. Bei mehrfachem Durchlauf wird das erläuterte Verfahren entsprechend oft durchlaufen. Insbesondere wird bei einem Messvorgang nach dem TCSPC Verfahren ein Messzyklus vielfach, beispielsweise 200 mal, durchgeführt.

Über die Time of Flight Methode, also die Laufzeit des Lichtpulses, kann durch die Auswerteeinheit der Abstand des Objekts aus den ermittelten Messwerten bestimmt werden. Die Messstrecke beträgt günstiger Weise um die 300 Meter, was einer ungefähren Laufzeit des Laserpulses von etwa zwei Mikrosekunden entspricht.

An einer Makrozelle können eines oder auch mehrere Ausleseelemente ausgebildet sein. Die Sensorelemente sind dementsprechend mit dem Ausleseelement oder den Ausleseelementen verbunden. Jedes Sensorelement ist mit zumindest einem Ausleseelement verbunden. Mit besonderem Vorteil ist ein Sensorelement lediglich mit einem einzigen Ausleseelement verbunden. Verbunden bedeutet, dass das Ausleseelement eine Detektion eines Sensorelements auslesen und die Information der Detektion in einem Speicherelement abspeichern kann. Ein Sensorelement kann lediglich dann von dem Ausleseelement ausgelesen werden, wenn es aktiv ist. Mit besonderem Vorteil ist das Ausleseelement mit allen Sensorelementen der Makrozelle verbunden. Dies schließt aber nicht aus, dass das Ausleseelement noch mit weiteren Sensorelementen von anderen Makrozellen verbunden ist, beispielsweise Sensorelemente von Makrozellen, die während des Messzyklus inaktiv sind.

Eine Makrozelle ist ein Konstrukt, welches im Normalfall nicht anhand der Hardwarekonfiguration definiert ist, sondern anhand der Steuer- und Auswertelogik. Die Makrozelle kann jedoch durch eine bestimmte Hardwarekonfiguration, also die gezielte Anordnung und Verbindung von Sensorelementen und Ausleseelemente definiert sein. Mit Vorteil deckt die Makrozelle bzw. dessen Sensorelemente eine Fläche ab, die größer ist als die Fläche des Emitterelements oder die Projektionsfläche des eintreffenden Laserlichts. Dies ermöglich es die bereits erwähnte Verschiebung durch Nah- und Fernfeldeffekte auszugleichen. Diese Verschiebung ergibt sich insbesondere aus einem Parallaxefehler. Bei einem solchen Parallaxefehler ist die Verschiebung abhängig von dem Abstand des Objekts von dem Messsystem. Die Makrozelle deckt günstigerweise zumindest ein Vielfaches der Projektionsfläche des Laserlichts oder der Fläche eines Emitterelements ab.

Die Sensorelemente sind jedes für sich einzeln oder auch als Mehrzahl von Sensorelementen gruppiert aktivierbar und deaktivierbar. Die erste Variante wird besonders bevorzugt. Die gruppierte Aktivierung entspricht der gleichzeitigen Aktivierung oder Deaktivierung einer Mehrzahl von Sensorelementen, vorzugsweise einer Untergruppe einer Makrozelle. Die Aktivierung und Deaktivierung wird bei SPAD beispielsweise durch ein Erhöhen oder ein Absenken der Vorspannung erreicht. Deaktivierte Elemente können keine eintreffenden Photonen detektieren und auch durch das Ausleseelement kann diese nicht ausgelesen werden. Ein auf ein aktives Sensorelement auftreffendes Photon kann durch das Ausleseelement ausgelesen werden.

Die Aktivierung und Deaktivierung des Sensorelements kann direkt oder indirekt erfolgen. Bei ersterem wird bei einer SPAD beispielsweise eine Vorspannung angelegt, sodass diese aktiv ist. Zum Deaktivieren verringert man die Vorspannung entsprechend unter einen Schwellwert. Bei einer indirekten Aktivierung oder Deaktivierung ist das Sensorelement selbst jederzeit aktiv, also in vorigem Beispiel unter Vorspannung. Stattdessen wird beispielsweise ein Ausleseelement deaktiviert oder ein Speichern der detektierten Photonen innerhalb eines Speichers deaktiviert oder verhindert.

Während des Messzyklus wird zu einem ersten Zeitpunkt zumindest eine Teilanzahl der Sensorelemente aktiviert. Erfindungsgemäß sind diese Sensorelemente alle Teil einer Makrozelle. Dementsprechend ist durch die Aktivierung zumindest eines Sensorelements der Makrozelle auch die Makrozelle aktiv. Der erste Zeitpunkt liegt günstigerweise an dem Beginn des Messzyklus, insbesondere vor, zeitgleich oder nach dem Aussenden des Lichtpulses durch das Emitterelement.

Mit der Aktivierung der Sensorelemente können diese Photonen Detektieren. Eine Detektion kann beispielsweise dann erfolgen, wenn das ausgesendete und reflektierte Laserlicht auf das Sensorelement trifft oder wenn Photonen der Umgebungsstrahlung auf das Sensorelement treffen. Jedes aktive Sensorelement erhöht einen Rauschgrund, der durch die Sensorelemente detektiert wird. Durch aktivieren der ausschließlich beleuchteten Sensorelemente lässt sich das beste Signal zu Rausch Verhältnis erhalten. Mit ansteigender Messzeit ändert sich jedoch eine Position des eintreffenden Laserlichts, sodass die Sensorelemente lediglich in einem bestimmten Zeitabschnitt des Messzyklus überhaupt die Möglichkeit haben das ausgesendete Laserlicht zu detektieren.

Dementsprechend werden zu einem zweiten Zeitpunkt innerhalb eines Messzyklus, der nach dem ersten Zeitpunkt liegt, eines oder mehrere Sensorelemente aktiviert und / oder eines oder mehrere Sensorelemente deaktiviert. Dies sind erfindungsgemäß Sensorelemente der aktiven Makrozelle. Dadurch sind genau die Sensorelemente aktiv, die ein reflektiertes Laserlicht detektieren können. Zudem tragen die inaktiven Sensorelemente nicht zu einer Erhöhung des Rauschgrundes bei.

Beispielhaft werden bei einem Messzyklus alle Sensorelemente der Makrozelle aktiviert. Bei einer Messung im Nahfeld ist die Intensität des reflektieren Laserlichts verhältnismäßig hoch, sodass das eintreffende Laserlicht trotz des hohen Rauschgrunds problemlos detektiert werden kann. Bei der Fernfeld Messung, also am dem zweiten Zeitpunkt wird ein Teil der Sensorelemente deaktiviert, sodass der Rauschgrund absinkt und lediglich die Sensorelemente aktiv sind, die das Laserlicht auch detektieren können.

Insbesondere kann zum zweiten Zeitpunkt eines oder mehrere Sensorelemente aktiviert werden. Alternativ kann zum zweiten Zeitpunkt eines oder mehrere Sensorelemente deaktiviert werden. In einer weiteren Alternative kann eines oder mehrere Sensorelemente aktiviert und zugleich eines oder mehrere andere Sensorelemente deaktiviert werden. Zugleich umfasst neben dem identischen Zeitpunkt auch eine zeitlich nahe Abfolge von Aktivieren und Deaktivieren der Sensorelemente.

Dieses Verfahren kann insbesondere beim TCSPC, welches eine Vielzahl zusammenhöriger Messzyklen ausführt, sowie auch bei anderen Verfahren verwendet werden, die beispielsweise lediglich einen einzigen Messzyklus benötigen.

Mit dem Ablauf einer Messzeit des Messzyklus werden die Sensorelemente und dementsprechend auch die Makrozellewieder deaktiviert. Nach der Anzahl der benötigten Messzyklen werden die daraus ermittelten Messdaten durch eine Auswerteeinheit ausgewertet. Anhand der Laufzeit der detektieren Photonen werden Objekte und deren Abstand ermittelt.

Die Auswerteeinheit kann als eigenständiges Bauteil ausgeführt sein, oder integrierter Bestandteil der Empfangseinheit sein.

Gemäß der vorigen Ausführungen kann auch zu einem dritten oder zu weiteren Zeitpunkten eines oder mehrere Sensorelemente aktiviert und / oder eines oder mehrere Sensorelement deaktiviert werden.

Durch die gezielte Aktivierung und Deaktivierung von Sensorelementen wird dementsprechend eine Verbesserung der Nahdetektion und der Ferndetektion für ein LIDAR Messsystem bzw. eine LIDAR Empfangseinheit erreicht.

Eine übliche Detektionsreichweite für ein solches LIDAR-Messsystem entspricht beispielsweise 300 Meter, wobei eine entsprechende Laufzeit des Pulses zu einem Objekt in 300 Metern Entfernung und zurück in etwa zwei Mikrosekunden benötigt.

Im Weiteren werden vorteilhafte Ausführungsvarianten des Verfahrens erläutert.

Mit besonderem Vorteil ist der Zeitabstand zwischen dem ersten Zeitpunkt und dem zweiten Zeitpunkt zwischen 50 bis 500 Nanosekunden lang, insbesondere 200 Nanosekunden.

Eine Dauer von 200 Nanosekunden zwischen den Zeitpunkten entspricht in etwa einer Laufzeit von 60 Metern für den Lichtpuls bzw. einer Messdistanz von 30 Metern. Dies stellt ein gutes Verhältnis dar, um die Nahfelddetektion bestmöglich auszugestalten und zudem bei größeren Messstrecken ein optimales Signal zu Rausch Verhältnis beizubehalten. Insbesondere ist auch Zeitabstand zwischen 150 bis 350 Nanosekunden von besonderem Vorteil.

Je nach Hardwareseitiger Ausgestaltung des Messsystems erfolgt eine Umschaltung zwischen zwei Messbereichen vorzugsweise zwischen 5% und 50% der vorgegebenen maximalen Messreichweite.

Erfindungsgemäß führt hinsichtlich jeder aktiven Makrozelle ein potentiell eintreffendes Laserlicht über die Dauer des Messzyklus eine Verschiebung an der Empfangseinheit durch, wobei die jeweiligen Sensorelemente der Makrozelle einen aktiven Bereich bilden und derart aktiviert und / oder deaktiviert werden, dass der aktive Bereich dieser Verschiebung folgt.

Die Verschiebung ergibt sich wie bereits erwähnt aus dem Parallaxeeffekt. Es wird sodann dafür gesorgt, dass zumindest die Sensorelemente aktiv sind, die vermeintlich von einem reflektierten Laserlicht beleuchtet werden.

In einem Beispiel wandert der vermeintlich eintreffende Laserspot an der Empfangseinheit von unten nach oben über mehrere Zeilen von Sensorelementen hinweg. In einer Varianten können sodann alle Sensorelemente aktiv sein, wobei eine untere, nicht mehr beleuchtete Hälfte zu dem zweiten Zeitpunkt deaktiviert wird. Alternativ wird Zeile für Zeile sukzessive von unten nach oben hin deaktiviert. Ebenso ist es denkbar, dass immer zwei Zeilen aktiv sind, sodass sukzessive oberhalb der aktiven Zeilen eine Zeile aktiviert und eine unterste Zeile der aktiven Zeilen deaktiviert wird.

Ein Sensorelement folgt somit zwar nicht selbst dem vermeintlichen eintreffenden Laserspot, aber es sind genau die Sensorelemente aktiv, an denen das Laserlicht eintreffen würde.

Insbesondere bilden diese aktiven Sensorelemente einen aktiven Bereich. Dieser aktive Bereich folgt der Verschiebung des potentiell eintreffenden Laserlichts. Dieser aktive Bereich jeder aktiven Makrozelle ist erfindungsgemäß durch Sensorelemente dieser Makrozelle gebildet.

Es wird ein weiteres Verfahren zur Verbesserten Nah- und Ferndetektion einer LIDAR Empfangseinheit gemäß Anspruch 3 vorgeschlagen. Dieses Verfahren löst ebenfalls die anfangs gestellte Aufgabe. In den abhängigen Ansprüchen sind vorteilhafte Ausgestaltungsvarianten beschrieben.

Der grundsätzliche Aufbau der LIDAR Empfangseinheit zur Anwendung des Verfahrens ist im Wesentlichen identisch zu der weiter oben erläuterten. Die vorherigen Ausführungen können demnach sinngemäß für das im Weiteren erläuterte Verfahren herangezogen werden. Unterschiede zwischen der Messsystemen oder den Empfangseinheiten sind im Weiteren konkret ausgeführt.

Auch hier sind die Empfangseinheit und die Sendereinheit in der Focal Plane Array Konfiguration ausgeführt, deren Ebenen im Brennpunkt der entsprechenden Optik angeordnet sind. Zudem ist auch eine Makrozelle einem Emitterelement zugeordnet bzw. ein Emitterelement bildet durch die entsprechenden Optiken auf eine Makrozelle der Empfangseinheit ab.

Die Empfangseinheit weist mehrere Sensorelemente auf. Die Sensorelemente sind Makrozellen zugewiesen, wobei eine Makrozelle zumindest zwei Sensorelemente aufweist. Die Makrozelle ist weiter unterteilt mehrere Auslesezellen, zumindest eine erste Auslesezelle und eine zweite Auslesezelle. Die erste Auslesezelle weist zumindest ein erstes Sensorelement und ein erstes Ausleseelement auf, wobei das zumindest eine Sensorelement mit dem ersten Ausleseelement verbunden ist. Zudem weist die zweite Auslesezelle zumindest ein zweites Sensorelement und ein zweites Ausleseelement auf, wobei das zumindest eine zweite Sensorelement mit dem zweiten Ausleseelement verbunden ist. Vorteilhafterweise weist jede Auslesezelle mehrere Sensorelemente auf, wobei die Summe der Sensorelemente der Auslesezelle der Anzahl der Sensorelemente der übergeordneten Makrozelle entspricht.

Wenn in einer Auslesezelle mehrere Sensorelemente ausgebildet sind, dann ist vorzugsweise jedes Sensorelement mit einem Ausleseelement verbunden. Gegebenenfalls können alle Sensorelemente einer Auslesezelle mit demselben Ausleseelement verbunden sein. Sofern in einer Auslesezelle mehrere Sensorelemente und mehrere Ausleseelemente ausgebildet sind, können die ersten Sensorelemente mit einem jeweils eigenen ersten Ausleseelement oder in Gruppen mit den ersten Ausleseelementen verbunden sein. Entsprechendes gilt für die zweite Auslesezelle und deren zweite Sensorelemente und deren zweite Ausleseelemente. Ein Sensorelement ist vorzugsweise mit einem Ausleseelement verbunden, wobei ein Ausleseelement auch mit mehreren Sensorelementen verbunden sein kann. Ein Ausleseelement kann auch mit mehreren Sensorelementen verschiedener Makrozellen verbunden sein.

Während des Messzyklus wird zu einem ersten Zeitpunkt zumindest eine Teilanzahl der Auslesezellen aktiviert. Dies kann beispielsweise eine einzelne Auslesezelle, mehrere Auslesezellen, sofern vorhanden, oder es können alle Auslesezellen der Makrozelle sein. Eine Auslesezelle ist aktiv, wenn ein Sensorelement, das zugehörige Ausleseelement und eine Speicherzelle gemeinsam aktiv sind. Also wenn ein eingehendes Photon, beispielsweise von einem Laserpuls, durch das Sensorelement detektiert, das Ausleseelement ausgelesen und innerhalb des Speicherelements gespeichert wird. Eine Auslesezelle kann beispielsweise über die Aktivierung und die Deaktivierung des Sensorelements sowie auch über die Aktivierung und Deaktivierung der Ausleseeinheit gesteuert werden.

Zu einem zweiten Zeitpunkt innerhalb des Messzyklus, der nach dem ersten Zeitpunkt liegt, wird eine Auslesezelle aktiviert und / oder eine Auslesezelle deaktiviert. Dementsprechend kann eine Auslesezelle aktiviert werden. Alternativ kann eine Auslesezelle deaktiviert werden. In einer weiteren Alternative wird eine Auslesezelle aktiviert und zugleich eine andere Auslesezelle deaktiviert. Gegebenenfalls vorhandene weitere Auslesezellen verbleiben in deren Zustand.

Die hierbei erwähnten Zeitpunkte und auch der Messzyklus entsprechen im Wesentlichen den obigen Ausführungen zu dem Verfahren nach Anspruch 1. Die obigen Ausführungen sind dementsprechend sinngemäß anwendbar.

Beispielhaft werden zu dem ersten Zeitpunkt eine erste Auslesezelle und eine zweite Auslesezelle aktiviert, wobei zu dem zweiten Zeitpunkt die erste Auslesezelle aktiv verbleibt und die zweite Auslesezelle deaktiviert wird. Dadurch wird ein niedrigerer Rauschgrund erreicht, der eine bessere Auswertung der Messdaten ermöglicht.

Pro Auslesezelle kann lediglich ein Sensorelement oder einer Mehrzahl an Sensorelementen aktiv sein. Günstiger Weise sind allerdings nicht alle, sondern lediglich ein Teil der Sensorelemente der Auslesezelle aktiv. Mit dem Ende des Messzyklus wird mit besonderem Vorteil das Speicherelement durch die Ausleseeinheit befüllt, wodurch anschließend die Auswerteeinheit gemäß dem Time of Flight Prinzip den Abstand zu dem detektierten Objekt bestimmt.

Im Weiteren werden vorteilhafte Ausführungsvarianten des Verfahrens beschrieben.

Günstiger Weise ist der zeitliche Abstand zwischen dem ersten Zeitpunkt und dem zweiten Zeitpunkt zwischen 150 Nanosekunden bis 500 Nanosekunden lang, insbesondere 200 Nanosekunden.

Eine Dauer des Zeitabschnitts von 200 Nanosekunden entspricht in etwa einer Laufzeit von 60 Metern für den Lichtpuls. Dies stellt ein gutes Verhältnis dar, um die Nahfelddetektion bestmöglich auszugestalten und zudem bei größeren Abständen des Objekts ein optimales Signal zu Rausch Verhältnis beizubehalten. Insbesondere ist auch Zeitabstand zwischen 150 bis 350 Nanosekunden von besonderem Vorteil.

Je nach Hardwareseitiger Ausgestaltung des Messsystems erfolgt eine Umschaltung zwischen zwei Messbereichen vorzugsweise zwischen 5% und 50% der vorgegebenen maximalen Messreichweite.

Erfindungsgemäß führt ein potentiell eintreffendes Laserlicht über die Dauer des Messzyklus eine Verschiebung an der Empfangseinheit durch, wobei die Auslesezellen einen aktiven Bereich bilden und derart aktiviert und / oder deaktiviert werden, dass der aktive Bereich dieser Verschiebung folgt.

Die Verschiebung ergibt sich wie bereits erwähnt aus dem Parallaxeeffekt. Es wird sodann dafür gesorgt, dass zumindest die Auslesezellen aktiv sind, die vermeintlich von einem reflektierten Laserlicht beleuchtet werden.

In einem Beispiel wandert der vermeintlich eintreffende Laserspot an der Empfangseinheit von unten nach oben über mehrere Zeilen von Auslesezellen hinweg. In einer Varianten können sodann alle Auslesezellen aktiv sein, wobei eine untere, nicht mehr beleuchtete Hälfte zu dem zweiten Zeitpunkt deaktiviert wird. Alternativ wird Zeile für Zeile sukzessive von unten nach oben hin deaktiviert. Ebenso ist es denkbar, dass immer zwei Zeilen aktiv sind, sodass sukzessive oberhalb der aktiven Zeilen eine Zeile aktiviert und eine unterste Zeile der aktiven Zeilen deaktiviert wird.

Eine Auslesezelle folgt somit zwar nicht selbst dem vermeintlichen eintreffenden Laserspot, aber es sind genau die Auslesezellen aktiv, an denen das Laserlicht eintreffen würde.

Insbesondere bilden diese aktiven Auslesezellen einen aktiven Bereich. Dieser aktive Bereich folgt der Verschiebung des potentiell eintreffenden Laserlichts. Dieser aktive Bereich jeder Auslesezelle ist erfindungsgemäß durch die Auslesezellen der jeweiligen Makrozelle gebildet.

Neben der ersten Auslesezelle und der zweiten Auslesezelle können entsprechend auch noch weitere Zellen ausgebildet sein, die in einem jeweiligen weiteren Zeitabschnitt deaktiviert und / oder auch aktiviert werden. Diese können beispielsweise nacheinander deaktiviert werden.

Die Aufgabe wird zudem durch ein LIDAR Messsystem gemäß dem Patentanspruch 5 gelöst.

Dieses LIDAR Messsystem ist für eines der Verfahren nach den Ansprüchen 1 bis 4 oder nach zumindest einem der im vorigen erläuterten Verfahren geeignet. Konstruktive Ausführungen eines solchen LIDAR Messsystems sind den vorigen Ausführungen zu entnehmen.

Das Messsystem weist unter anderem eine Empfangseinheit mit Sensorelementen auf. Zudem weist das Messsystem vorteilhafterweise eine Sendeeinheit mit Emitterelementen auf. Ein Steuerelement des Messsystems sorgt nun für eine Ansteuerung der Emitterelemente und der Sensorelemente.

Insbesondere sorgt das Steuerelement dafür, dass die einzelnen Elemente zu den richtigen Zeitpunkten aktiviert und deaktiviert werden, sodass der Messvorgang synchron abläuft. Insbesondere bei einer Vielzahl an Messzyklen innerhalb eines Messvorgangs ist dies von großer Bedeutung. Ein solches Steuerelement ist beispielsweise durch einen Timing Generator ausgebildet, der eine ausreichen genaue Zeitmessung bereitstellt und die Zeitpunkte zum Schalten der Elemente genau vorgibt. Dadurch bleibt der Messvorgang auch über eine Vielzahl von Messzyklen synchron, sodass optimale Messergebnisse erzielt werden. Dies ist insbesondere bei der Verwendung des TCSPC Verfahrens von Vorteil.

Das Steuerelement kann hierbei die Schaltzeiten von Emitterelement und Sensorelementen vorgeben. Alternativ kann das Steuerelement auch die Schaltzeiten für Auslesezellen vorgeben sowie auch für weitere Elemente des Messsystems. Insbesondere wird durch das Steuerelement eine Referenzzeit für das Histogramm bereitgestellt.

Die Verfahren werden im Weiteren beispielhaft anhand mehrerer Figuren erläutert. Es zeigen:
- Fig. 1: schematische Darstellung eines LIDAR-Messsystems;
- Fig. 2a, 2b: schematische Darstellung eines Ausschnitts einer LIDAR-Empfangseinheit mit Sensorelementen;
- Fig. 3: eine weitere Variante einer LIDAR-Empfangseinheit in einer anderen Konfiguration;
- Fig. 4: Ablaufplan eines Messzyklus.

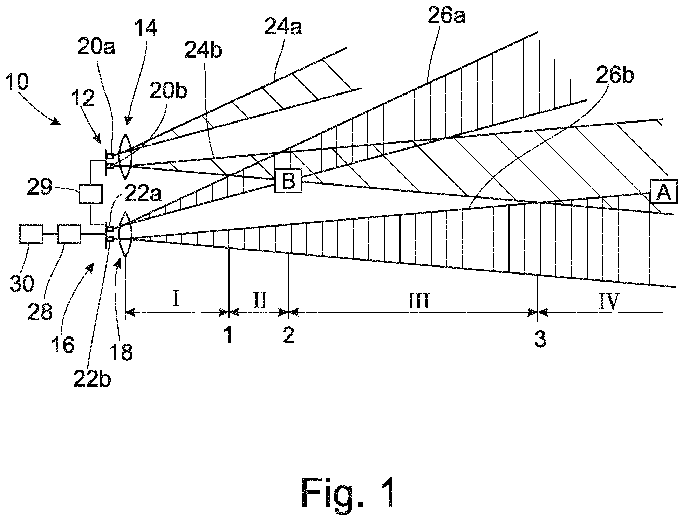

In der Fig. 1 ist eine schematische Darstellung eines LIDAR Messsystems 10 gezeigt. Das LIDAR Messsystem 10 weist eine Sendeeinheit 12 und eine Sendeoptik 14 sowie eine Empfangseinheit 16 und eine Empfangsoptik 18 auf. Die Sendeeinheit 12 und die Empfangseinheit 16 sind in der Focal Plane Array Konfiguration ausgeführt. Dies bedeutet, dass die Emitterelemente 20 der Sendeeinheit 12 sowie die Sensorelemente 22 der Empfangseinheit 16 auf einer ebenen Fläche ausgebildet sind. Diese ebene Fläche kann beispielsweise durch einen Chip ausgebildet sein. Des Weiteren sind die Einheiten 12 und 16 in einer Brennebene bzw. einem Brennpunkt der Sendeoptik 14 und der Empfangsoptik 16 angeordnet.

Die Emitterelemente 20 sind vorzugsweise als Vertical Cavity Surface Emitting Laser, VCSEL, ausgebildet. Die Sensorelemente 22 sind günstiger Weise durch Single Photon Avalanche Diode, auch SPAD genannt, ausgebildet. Vorteil dieser Konfiguration ist, dass keine beweglichen Teile benötigt werden.

Die Sendeeinheit 12 und die Empfangseinheit 16 weisen mehrere Emitterelemente 20 bzw. mehrere Sensorelemente 22 auf, die durch die Optiken 14 und 18 einen jeweiligen Raumwinkel zugeordnet sind. Die Sendeeinheit und die Empfangseinheit 22 weisen jeweils einander zugewiesene Emitterelemente 20 und Sensorelemente 22 auf. In der Figur 1 sind beispielhaft und auch überdeutlich jeweils zwei Emitterelemente 20 und zwei Sensorelemente 22 dargestellt. In der beispielhaften Darstellung weist die Sendeeinheit 12 nur zwei Emitterelemente 20a und 20b sowie die Empfangseinheit 16 nur zwei Sensorelemente 22a und 22b auf. Die Anzahl der Sensorelemente 22 und der Emitterelemente 20 ist in einem Messsystem 10 normalerweise wesentlich größer. Anhand der Fig. 1 soll im Wesentlichen der Parallaxeeffekt erläutert werden.

Bei einem Messzyklus emittiert ein Emitterelement 22 Laserlicht, vorzugsweise in Form eines Laserpulses, der über eine Senderoptik 14 in einen ersten Raumwinkel 24 abgestrahlt wird. Der Laserpuls wird dann an einem etwaigen Objekt reflektiert und über die Empfangsoptik 18 auf die Empfangseinheit 16 projiziert. Ein Sensorelement 22 betrachtet über die Optik ebenfalls einen jeweiligen Raumwinkel 26.

Hierbei sind beispielhaft übertriebene Winkel und Abschnittsverhältnisse dargestellt. Der erste Raumwinkel 24a, in den das Emitterelement 20a sein Laserlicht emittiert, weist eine Divergenz von 10 Grad auf und ist um etwa 20 Grad nach oben geneigt. Der erste Raumwinkel 24b, in den das Emitterelement 20b sein Laserlicht emittiert, weist keine Neigung auf, aber ebenso eine Divergenz von 10 Grad. Entsprechendes gilt auch für die beiden Sensorelemente 22a und 22b, die über die Empfangsoptik 18 mit dem Sensorelement 22a einen zweiten Raumwinkel 26a, der rund 20 Grad nach oben bei einer Divergenz von 10 Grad aufweist, betrachtet und das Sensorelement 22b den Raumwinkel 26b bei einer Neigung von 0 Grad und einer Divergenz von 10 Grad aufweist.

Aufgrund der übertriebenen Darstellung der Fig. 1 ist sofort erkennbar, dass nicht immer eine Überlappung zwischen den Raumwinkeln 24 und 26 vorliegt. Dennoch ist das Emitterelement 20a dem Sensorelement 22a und das Emitterelement 20b dem Sensorelement 22b zugewiesen. Diese Raumwinkel kommen bei großen Abständen im Wesentlichen zur vollständigen Überlappung. Im Nahbereich, der in der Fig. 1 dargestellt ist, ist lediglich eine geringe Überlappung gezeigt und diese auch erst in einem Bereich IV. In diesem Nahbereich gibt es verschiedene Überlappungsbereiche zwischen den unterschiedlichen Raumwinkeln. Dabei gibt es in einem ersten Bereich I keine Überlappung der Raumwinkel. In dem Bereich II tritt erstmalig eine Überlappung zwischen dem ersten Raumwinkel 24b und dem zweiten Raumwinkel 26a auf. Sofern sich ein Objekt in diesem Abstand zu dem LIDAR-Messsystem 10 aufhält, kann ein reflektierender Laserpuls von der Empfangseinheit detektiert werden.

Selbiges gilt auch für den Bereich III, in dem immer noch eine Überlappung der beiden Raumwinkel gegeben ist. Die Überlappung steigt in dem Bereich II an und nimmt in dem Bereich III wieder ab, wobei diese an der Stelle 2 maximal ist und hin zur Stelle 3 wieder abnimmt. Eine Überlappung der Raumwinkel 24b und 26b beginnt ab der Stelle 3 in dem Bereich IV und steigt bis auf eine maximale Überlappung in großer Distanz an. Die beste Detektion eines Objekts wird in diesem übertriebenen Ausführungsbeispiel zur Stelle 2 hin sowie zum Ende des Bereichs IV, also bei großem Abstand, erreicht. Man erkennt zudem, dass das auf der Empfangseinheit 16 eintreffende Laserlicht, welches an einem Objekt reflektiert wird, sich bei annäherndem Objekt eine Bewegung entlang der Sensorelemente 22 vollzieht. Das auf die Empfangseinheit 16 projizierte Licht bewegt sich bei sich annäherndem Objekt immer zu der Sendereinheit 12 hin. In diesem Fall von dem Sensorelement 22b zu dem Sensorelement 22a hin. In diesem Sinne wird das weit entferne Objekt A durch das Sensorelement 22b detektiert, wohingegen das Objekt B im Nahfeld von dem Sensorelement 22 a detektiert wird.

An der Empfangseinheit 16 sind bei einer konkreten Ausführung eines solchen Messsystems 10 wesentlich mehr Sensorelemente 22 angeordnet, sodass eine Lückenfreie Detektion über alle Bereich erfolgen kann.

Ein emittierter und reflektierter Laserpuls wird demnach von einem Sensorelement 22 detektiert, welches von einem Ausleseelement 28 ausgelesen und die daraus ermittelten Messdaten von einer Auswerteeinheit 30 ausgewertet werden. Dabei wird das Time of Flight Prinzip angewendet. Zumeist speichert die Ausleseeinheit 28 die Messdaten in einem Speicherelement zwischen, von dem die Auswerteeinheit 30 die Messdaten erhält. Die ausgewerteten Daten können dann an weitere Komponenten des Fahrzeugs weitergeleitet werden.

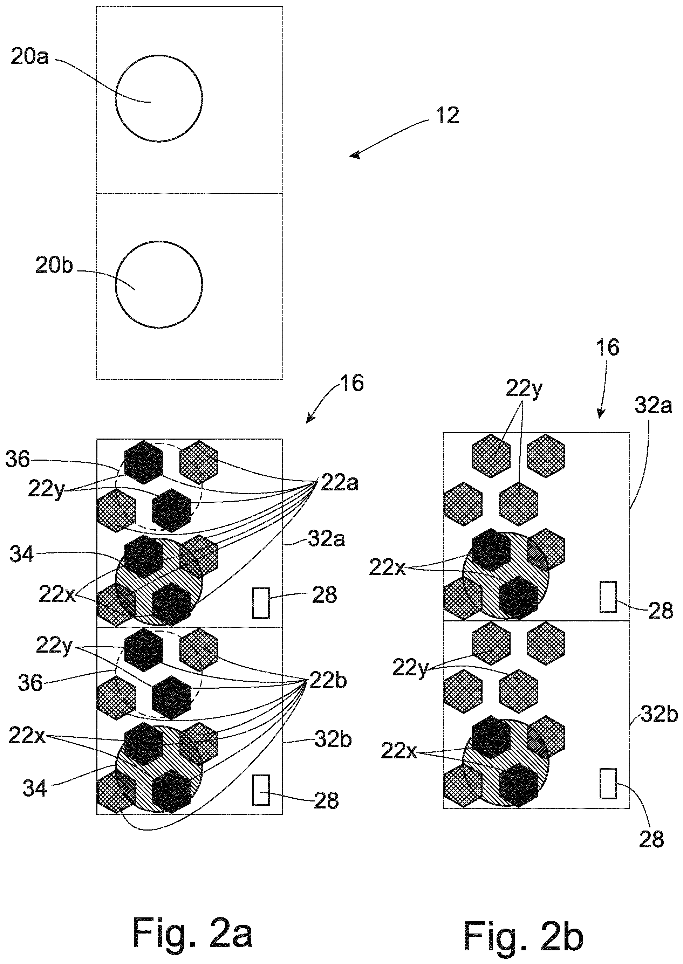

In der Fig. 2a sind eine Sendeeinheit 12 sowie eine Empfangseinheit 16 dargestellt. Diese sind beispielhaft übereinander angeordnet, können allerdings auch nebeneinander angeordnet sein. Die Darstellung zeigt lediglich einen kleinen Ausschnitt der Sendeeinheit 12 und der Empfangseinheit 16 sowie derer Emitterelemente und Sensorelemente. Die Sendeeinheit 12 weist die Emitterelemente 20a und 20b auf, sowie die Empfangseinheit 16 die Sensorelemente 22a und 22b. Die Sensorelemente 22 sind in Makrozellen 32 angeordnet, hierbei durch die Einrahmung in Form von Kästen verdeutlicht. Die logische Aufteilung für die Auswerteeinheit 30 entspricht hierbei beispielhaft auch der hardwareseitigen Aufteilung in Makrozellen 32.

Die Empfangseinheit 14 weist mehr Sensorelemente 22 auf als die Sendeeinheit 12 Emitterelemente 20. Dies ist einerseits dem Parallaxeeffekt und andererseits dem Abbildungsverhalten der Emitterelemente 20auf die Empfangseinheit 16 geschuldet. Insbesondere ist die von einem Emitterelement 20 beleuchtete Fläche größer als die Fläche eines Sensorelements 22. Eine Makrozelle 32 ist dabei durch die Sensorelemente 22 definiert, die in dem potentiellen Abbildungsbereich des Emitterelements angeordnet sind. Der Abbildungsbereich des Emitterelements 20 auf der Empfangseinheit 16 ist größer als die Oberfläche des Emitterelements 20 selbst. Dies ist begründet durch die bereits erläuterten Effekte.

In diesem Fall weist jede Makrozelle 32 seine eigenen Sensorelemente 22a und 22b auf. Die Makrozelle 32a weist die Sensorelemente 22a und die Makrozelle 32b die Sensorelemente 22b auf. Es kann allerdings auch sein, dass Sensorelemente mehreren Makrozellen zugeordnet sind. Dies bedeutet, dass sich Makrozellen überlappen können. Beispielhaft ist ein Kreis 34 eingezeichnet welcher einen theoretischen Abbildungspunkt eines Emitterelements 20a und 20b auf die zugehörige Makrozelle 32a und 32b bei, einer Reflektion an einem Objekt in großer Distanz darstellt. Zudem ist beispielhaft ein strichlinierter Kreis 36 dargestellt, der ein Abbildungsverhalten im Nahbereich verdeutlicht. Wie bereits erwähnt, wandert das eintreffende Laserlicht an der Empfangseinheit 14 vom Fernfeld ausgehend von der theoretischen Fernfeldposition hin zu dem Sendeelement 12, da die Sendeeinheit 12 oberhalb der Empfangseinheit angeordnet ist also nach oben.

Die Sensorelemente in der Fig. 2a sind teilweise schwarz ausgefüllte, also aktiv, oder als schraffierte, und somit inaktiv, Sensorelemente 22 dargestellt. Jedes der Sensorelemente 22 ist einzeln aktivierbar und deaktivierbar. Bei einer SPAD kann dies durch anheben oder absenken einer Vorspannung erreicht werden. Durch die Möglichkeit des individuellen Aktivierens und Deaktivierens können immer genau die Sensorelemente aktiviert werden, bei denen voraussichtlich ein Laserlicht auftrifft. Dies ermöglicht beispielsweise den Ausgleich von Abbildungsfehlern der Optiken.

Die relevanten Makrozellen 32 werden mit Beginn eines Messzyklus aktiviert. Zu Beginn des Messzyklus ist beispielhaft eine Teilanzahl der Sensorelemente aktiviert. Gegebenenfalls können auch alle Sensorelemente der aktiven Makrozelle 32 aktiv sein. Eine Makrozelle 32 ist dann aktiv, wenn zumindest ein zugehöriges Sensorelement aktiv ist und die Messdaten von einem Ausleseelement 28 ausgelesen werden können. Das Ausleseelement 28 ist in der Fig. 2a und 2b dargestellt und dabei mit allen Sensorelementen 22 der jeweiligen Makrozelle 32 verbunden.

Zur Verbesserung der Nah- und Fernfelddetektion werden die Sensorelemente 22 zu unterschiedlichen Zeitpunkten des Messzyklus aktiviert und / oder deaktiviert, in diesem Fall Zweiteres. Die Sensorelemente 22 einer Makrozelle 32 lassen sich somit in erste Sensorelemente 22x und in zweite Sensorelemente 22y aufteilen. Gegebenenfalls können auch noch dritte oder auch weitere Sensorelemente ausgebildet sein.

Zu einem ersten Zeitpunkt innerhalb eines Messzyklus, vorzugsweise zu Beginn des Messzyklus oder kurz danach, werden die ersten Sensorelemente 22x und die zweiten Sensorelemente 22y der Makrozellen 32 aktiviert. In der Fig. 2a ist dies durch die Füllung kenntlich gemacht. Die aktiven Sensorelemente 22 sind vollständig ausgefüllt. Eben diese aktiven Sensorelemente 22 erfahren die beste Ausleuchtung durch reflektierte das Laserlicht. Die weiteren lediglich teilweise beleuchteten Sensorelemente sind deaktiviert, und daher schraffiert dargestellt. Dadurch lässt sich ein optimales Signal zu Rauschverhältnis erreichen, da lediglich beleuchtete Sensorelemente sinnvolle Messwerte ermittelt können. Nicht beleuchtete oder schlecht beleuchtete Sensorelemente 22 detektieren vorwiegend eine Umgebungsstrahlung, also einen Rauschgrund, der das Signal zu Rausch Verhältnis verschlechtert.

Durch die Aktivierung der ersten und zweiten Sensorelemente 22x und 22y können Objekte in einem Nahbereich detektiert werden. Durch die Nähe des Objekts zum LIDAR-Messsystem 10 ist zudem noch eine hohe Intensität vorhanden, die eine etwaige Erhöhung des Rauschgrundes durch die Verwendung von mehreren Sensorelementen problemlos ausgleichen kann. Mit ansteigender Laufzeit des Messzyklus endet der erste Zeitabschnitt, woraufhin zu dem zweiten Zeitpunkt ein zweiter Zeitabschnitt beginnt.

Zu dem zweiten Zeitpunkt während des Messzyklus bleiben die ersten Sensorelemente 22x aktiv, wohingegen die zweiten Sensorelemente 22y deaktiviert werden. Dies kann beispielsweise nach einer Zeit von etwa 200 Nanosekunden geschehen. Dies entspricht in etwa 30 Meter Abstand eines Objekts, wobei ab dieser Distanz bereits von einer ausreichenden Fernüberlappung der Raumwinkel 24 und 26 ausgegangen werden kann. Mit anderen Worten bewegt sich der eintreffende Laserpuls mit steigendem Abstand des Objekts von dem strichlinierten Kreis 36 hin zu dem Kreis 34.

Durch die Deaktivierung der zweiten Sensorelemente 22y, die nun nicht mehr beleuchtet werden, kann das Hintergrundrauschen wesentlich verringert werden. Dies gleicht zudem eine geringere Intensität des rückgestreuten Laserlichts aus.

Innerhalb des ersten Zeitabschnitts tragen die Sensorelemente 22x und die Sensorelemente 22y zur Messung bei, wobei in dem zweiten Zeitabschnitt lediglich die Sensorelemente 22x zur Messung beitragen. Dementsprechend bilden innerhalb des ersten Zeitabschnitts die Sensorelemente 22x und 22y den aktiven Bereich aus. Während des zweiten Zeitabschnitts umfasst der aktive Bereich sodann nur noch durch die Sensorelemente 22x. Sofern noch weitere, beispielsweise dritte oder vierte, Sensorelemente 22 verwendet werden, ist eine entsprechende größere Anzahl von Zeitpunkten notwendig, an denen die Sensorelemente sukzessive deaktiviert werden.

Die Sensorelemente 22, die weder Sensorelemente 22x oder 22y sind, sind beispielsweise aufgrund einer Kalibrierung deaktiviert. Diese Kalibrierung ermittelt beispielsweise statische Abbildungsfehler, beispielsweise aufgrund von Toleranzen oder Ungenauigkeiten der verwendeten Optiken. Derartige Sensorelemente können währende des gesamten Messzyklus inaktiv bleiben.

In der Fig. 1 ist zudem noch ein Steuerelement 29 eingezeichnet. Diese Steuereinheit koordiniert den zeitlich korrekten Ablauf der Messzyklen und auch des Messvorgangs. Diese aktiviert und deaktiviert die Emitterelemente 20 sowie die Sensorelemente 22 zu den korrekten Zeitpunkten. Insbesondere wird so ein Steuerelement 29 auch Timing Generator genannt.

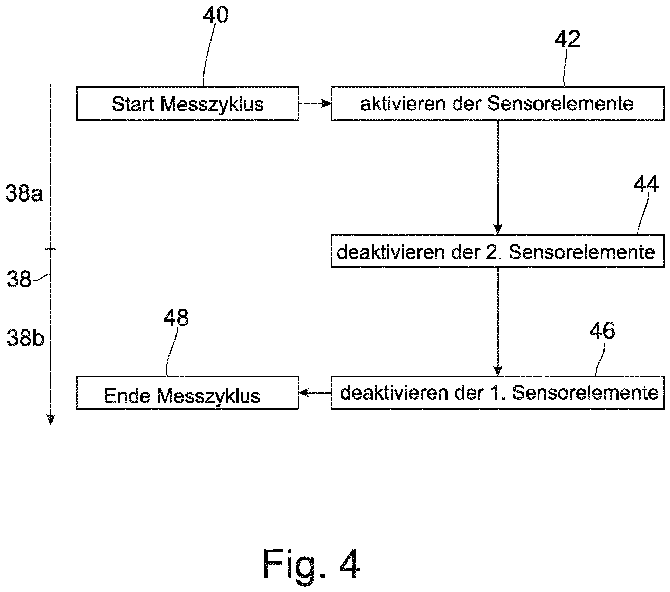

In der Fig. 4 ist ein entsprechender Ablauf eines derartigen Messzyklus gezeigt. Dieser ist entlang einer Zeitachse 38 aufgetragen. Der Messzyklus startet mit Schritt 40. Zeitgleich oder auch zeitlich kurz versetzt zum Start des Messzyklus werden die ersten und die zweiten Sensorelemente in Schritt 42 zum ersten Zeitpunkt aktiviert. Nach Ablauf des ersten Zeitabschnitts 38a werden die zweiten Sensorelemente in Schritt 44 zum zweiten Zeitpunkt deaktiviert. Mit Ablauf des zweiten Zeitabschnitts 38b endet der Messzyklus 48 mit dem Deaktivieren der verbleibenden ersten Sensorelemente in Schritt 46. Letztlich werden in dem Schritt 46 alle Sensorelemente deaktiviert. Die Deaktivierung der zweiten Sensorelemente 22y aus Schritt 44 ist in der Fig. 2b dargestellt. Man erkennt, dass lediglich die ersten Sensorelemente 22x aktiv bleiben und die Sensorelemente 22y deaktiviert werden.

Ein solcher Messzyklus kann bei einem Messvorgang beispielsweise ein einziges Mal durchgeführt werden. Bei einem Messvorgang gemäß dem TCSPC Verfahren wird ein solcher Messzyklus vielfach wiederholt.

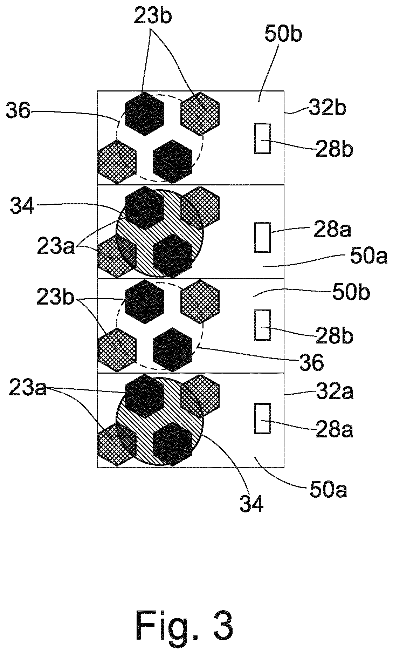

Eine weitere Variante ist in der Fig. 3 gezeigt. Die Konfiguration des LIDAR Messsystems 10 stimmt im Wesentlichen mit der Konfiguration des LIDAR-Messsystems 10 der vorigen Ausführungsvariante überein. Die obigen Ausführungen gelten entsprechend sinngemäß. Die Unterschiede werden erläutert.

Die Makrozellen 32 werden in Auslesezellen 50 eingeteilt. Dabei weist eine Makrozelle 32 zumindest eine erste Auslesezelle 50a und eine Auslesezelle 50b auf. Jede Auslesezelle 50 weist jeweils ein eigenes Ausleseelement 28 auf, welches mit den Sensorelementen 23 der Auslesezelle 50 verbunden ist. Entsprechend sind die ersten Sensorelemente 23a der ersten Auslesezelle 50a mit dem ersten Ausleseelement 28a verbunden, die zweiten Sensorelemente 23b der zweiten Auslesezelle 50b mit dem zweiten Ausleseelement 28b.

In diesem Ausführungsbeispiel ist pro Auslesezelle 50 jeweils ein Ausleseelement 28 ausgebildet. Es können gemäß anderer Ausführungsvarianten jedoch auch noch weitere Ausleseelemente 28a und 28b in den jeweiligen Auslesezellen 50 ausgebildet sein.

Grundsätzlich gilt, dass ein Ausleseelement 28 einer ersten Auslesezelle 50a auch mit weiteren ersten Sensorelementen 23a von anderen ersten Auslesezellen 50a verbunden sein kann. Entsprechendes gilt auch für die zweiten Sensorelemente 23b der zweiten Auslesezellen 50b.

Der zeitliche Ablauf des Verfahrens entspricht im Wesentlichen dem der Fig. 2a, 2b und 4 sowie den zugehörigen Erläuterungen. Es werden allerdings nicht die Sensorelemente 23 als solche aktiviert und deaktiviert, sondern die Auslesezellen 50a und 50b. Dementsprechend sind in dem ersten Zeitabschnitt die Auslesezellen 50a und 50b aktiv, wohingegen in dem zweiten Zeitabschnitt die Auslesezellen 50b deaktiviert werden.

Allerdings werden hierbei nicht zwangsweise die Sensorelemente aktiviert und deaktiviert. Es können auch die Auslesezellen aktiviert oder deaktiviert werden. Dies kann beispielsweise durch aktivieren bzw. deaktivieren Ausleseelemente selbst oder durch die Vorgabe von Zeitfenstern, innerhalb derer die Ausleseelemente den Speicher beschreiben dürfen. Dadurch liest ein entsprechendes Ausleseelement lediglich innerhalb des ersten und / oder des zweiten Zeitabschnitts die Messdaten der Sensorelemente aus und speichert diese in das Speicherelement.

Die Auswerteeinheit 30 berechnet nach Abschluss eines Messvorgangs die Entfernung des Objekts unter Verwendung der ersten und zweiten Sensorelemente für das Nahfeld und für das Fernfeld lediglich unter Verwendung der Messwerte der ersten Sensorelemente 23a der ersten Auslesezelle 50a. Auch hierdurch lässt sich ebenfalls ein verbessertes Signal zu Rauschverhältnisse bereitstellen.

Die Fig. 4 lässt sich im Wesentlichen identisch übertragen. Es ist lediglich in den Schritten 42, 44 und 46 anstelle der Aktivierung oder Deaktivierung des Sensorelements die Aktivierung oder Deaktivierung der Auslesezelle zu ersetzen.

### Bezugszeichen

- 1: Stelle
- 2: Stelle
- 3: Stelle
- 10: LIDAR Messsystem
- 12: Sendeeinheit
- 14: Sendeoptik
- 16: Empfangseinheit
- 18: Empfangsoptik
- 20,a,b: Emitterelement, VCEL
- 22,a,b: Sensorelement, SPAD
- 23,a,b: Sensorelement, SPAD
- 22x: erste Sensorelemente
- 22y: zweite Sensorelemente
- 24: erster Raumwinkel
- 26: zweiter Raumwinkel
- 28: Ausleseelement
- 28a: erstes Ausleseelement
- 28b: zweites Ausleseelement
- 29: Steuerelement
- 30: Auswerteeinheit
- 32: Makrozelle
- 32a: erste Makrozelle
- 32b: zweite Makrozelle
- 34: Kreis
- 36: strichlinierter Kreis
- 38: Zeitachse
- 38a: erster Zeitabschnitt
- 38b: zweiter Zeitabschnitt
- 40: Schritt, Start Messzyklus
- 42: Schritt, Aktivieren der ersten und zweiten Sensorelemente
- 44: Schritt, Deaktivieren der zweiten Sensorelemente
- 46: Schritt, Deaktivieren der ersten Sensorelemente
- 48: Schritt, Ende Messzyklus
- 50: Auslesezelle
- 50a: erste Auslesezelle
- 50b: zweite Auslesezelle
- I: erster Bereich
- II: zweiter Bereich
- III: dritter Bereich
- IV: vierter Bereich
- A: Objekt
- B: Objekt

## Patentansprüche

1. Verfahren zur verbesserten Nah- und Ferndetektion einer LIDAR Empfangseinheit (16),
- wobei mehrere Emitterelemente (20) einer Sendeeinheit (12) Laserpulse aussenden,
- wobei die Empfangseinheit (16) mehrere Sensorelemente (22) aufweist,
- wobei die Sensorelemente (22) in Makrozellen (32) organisiert sind,
- wobei jede Makrozelle (32) mehrere Sensorelemente (22) aufweist,
- wobei die Sensorelemente (22) der Makrozellen (32), direkt oder indirekt, aktiviert und deaktiviert werden können,
- wobei zu einem ersten Zeitpunkt innerhalb eines jeweiligen Messzyklus bezüglich eines Laserpulses eines Emitterelementes zumindest eine Teilanzahl der Sensorelemente (22) einer entsprechenden Makrozelle (32) und somit die Makrozelle (32) aktiviert wird,
- wobei zu einem zweiten Zeitpunkt innerhalb des Messzyklus, der nach dem ersten Zeitpunkt liegt, eines oder mehrere Sensorelemente jeder aktiven Makrozelle (32) aktiviert werden und / oder eines oder mehrere Sensorelemente der aktiven Makrozelle (32) deaktiviert werden,
**dadurch gekennzeichnet, dass**
die Sendeeinheit (22) und die Empfangseinheit (16) jeweils in einer Focal Plane Array - Konfiguration angeordnet sind,
wobei die Makrozellen (32) jeweils einem Emitterelement (20) einer Sendeeinheit (12) zugeordnet sind, sodass alle Sensorelemente (22) einer Makrozelle (32) demselben Emitterelement (20) zugeordnet sind,
wobei bezüglich jeder aktiven Makrozelle (32) ein potentiell eintreffendes Laserlicht über die Dauer des jeweiligen Messzyklus eine Verschiebung an der Empfangseinheit (16) durchführt, wobei die jeweiligen Sensorelemente (22) jeder aktiven Makrozelle (32) einen aktiven Bereich bilden und derart aktiviert und / oder deaktiviert werden, dass der jeweilige aktive Bereich der jeweiligen Makrozelle (32) dieser Verschiebung folgt.

2. Verfahren nach Anspruch 1, **dadurch gekennzeichnet, dass** der zeitliche Abstand zwischen dem ersten Zeitpunkt und dem zweiten Zeitpunkt zwischen 50 bis 500 Nanosekunden lang ist, insbesondere 200 Nanosekunden.

3. Verfahren zur verbesserten Nah- und Ferndetektion an einer LIDAR Empfangseinheit (10),
- wobei mehrere Emitterelemente (20) einer Sendeeinheit (12) Laserpulse aussenden,
- wobei die Empfangseinheit (16) mehrere Sensorelemente (22) aufweist,
- wobei die Sensorelemente (22) in Makrozellen (32) organisiert sind,
- wobei jede Makrozelle (32) mehrere Sensorelemente (22) aufweist,
- wobei jede Makrozelle (32) zumindest eine erste Auslesezelle (50a) und eine zweite Auslesezelle (50b) aufweist,
- wobei die erste Auslesezelle (50a) zumindest ein erstes Sensorelement (22a) aufweist, welches mit einem ersten Ausleseelement (28a) verbunden ist und
- wobei die zweite Auslesezelle (50b) zumindest ein zweites Sensorelement (22b) aufweist, welches mit einem zweiten Ausleseelement (28b) verbunden ist, wobei
- wobei zu einem ersten Zeitpunkt innerhalb eines jeweiligen Messzyklus an jeder aktiven Makrozelle (32) zumindest eine Teilanzahl der Auslesezellen aktiviert wird,
- wobei zu einem zweiten Zeitpunkt innerhalb des Messzyklus, der nach dem ersten Zeitpunkt liegt, eine Auslesezelle aktiviert wird und / oder eine Auslesezelle deaktiviert wird,
- wobei die Sendeeinheit (22) und die Empfangseinheit (16) in einer Focal Plane Array - Konfiguration angeordnet sind,
- wobei die Makrozellen (32) jeweils einem Emitterelement (20) einer Sendeeinheit (12) zugeordnet ist, sodass alle Sensorelemente (22) einer Makrozelle (32) demselben Emitterelement (20) zugeordnet sind,
wobei bezüglich jeder aktiven Makrozelle (32) ein potentiell eintreffendes Laserlicht über die Dauer des jeweiligen Messzyklus eine Verschiebung an der Empfangseinheit (16) durchführt, wobei die jeweiligen Auslesezellen (50) jeder aktiven Makrozelle (32) einen jeweiligen aktiven Bereich bilden und derart aktiviert und / oder deaktiviert werden, dass der aktive Bereich der jeweiligen Makrozelle (32) dieser Verschiebung folgt.

4. Verfahren nach Anspruch 3, **dadurch gekennzeichnet, dass** zeitliche Abstand zwischen dem ersten Zeitpunkt und dem zweiten Zeitpunkt zwischen 50 bis 500 Nanosekunden lang ist, insbesondere 200 Nanosekunden.

5. LIDAR Messsystem (10), umfassend eine LIDAR Sendeeinheit (12) mit Emitterelementen (20) und eine LIDAR Empfangseinheit (14) mit Sensorelementen (22), sowie ein Steuerelement (29) zur Steuerung der zeitlich korrekten Aktivierung und Deaktivierung von Sensorelementen (22) oder Auslesezellen (50) bei einem Messvorgang, wobei das LIDAR Messsystem (10) zur Durchführung des Verfahrens gemäß den Ansprüchen 1 bis 4 ausgestaltet ist.

## Claims

1. Method for improved near and far detection of a LIDAR receiver unit (16),
- wherein several emitter elements (20) of a transmitter unit (12) transmit laser pulses,
- wherein the receiver unit (16) has several sensor elements (22),
- wherein the sensor elements (22) are organized in macrocells (32),
- wherein each macrocell (32) has several sensor elements (22),
- whereby the sensor elements (22) of the macrocells (32) can be activated and deactivated directly or indirectly,
- wherein at a first point in time within a respective measuring cycle with respect to a laser pulse of an emitter element, at least a partial number of the sensor elements (22) of a corresponding macrocell (32) and thus the macrocell (32) is activated
- wherein at a second point in time within the measuring cycle, which is after the first point in time, one or several sensor elements of each active macrocell (32) are activated and/or one or several sensor elements of the active macrocell (32) are deactivated
**characterized in that**
the transmitter unit (22) and the receiver unit (16) are each arranged in a focal plane array configuration,
wherein the macrocells (32) are each assigned to an emitter element (20) of a transmitter unit (12), so that all sensor elements (22) of a macrocell (32) are assigned to the same emitter element (20),
wherein, with respect to each active macrocell (32), a potentially incoming laser light performs a displacement at the receiving unit (16) over the duration of the respective measuring cycle, wherein the respective sensor elements (22) of each active macrocell (32) form an active area and are activated and/or deactivated in such a way that the respective active area of the respective macrocell (32) follows this displacement.

2. Method according to claim 1, **characterized in that** the time interval between the first point in time and the second point in time is between 50 and 500 nanoseconds long, in particular 200 nanoseconds.

3. Method for improved near and far detection on a LIDAR receiver unit (10),
- wherein several emitter elements (20) of an transmitter unit (12) transmit laser pulses,
- wherein the receiver unit (16) has a plurality of sensor elements (22),
- wherein the sensor elements (22) are organized in macrocells (32),
- wherein each macrocell (32) has several sensor elements (22),
- wherein each macrocell (32) has at least a first readout cell (50a) and a second readout cell (50b),
- wherein the first readout cell (50a) has at least a first sensor element (22a) which is connected to a first readout element (28a), and
- wherein the second readout cell (50b) has at least one second sensor element (22b) which is connected to a second readout element (28b),
- wherein at a first point in time within a respective measuring cycle at each active macrocell (32), at least a partial number of the readout cells is activated,
- wherein at a second point in time within the measurement cycle, which is after the first point in time, a readout cell is activated and/or a readout cell is deactivated,
- wherein the transmitter unit (22) and the receiver unit (16) are arranged in a focal plane array configuration,
- wherein the macrocells (32) are each assigned to an emitter element (20) of a transmitter unit (12), so that all sensor elements (22) of a macrocell (32) are assigned to the same emitter element (20),
wherein, with respect to each active macrocell (32), a potentially incoming laser light performs a displacement at the receiving unit (16) over the duration of the respective measuring cycle, wherein the respective readout cells (50) of each active macrocell (32) form a respective active area and are activated and/or deactivated in such a way that the active area of the respective macrocell (32) follows this displacement.

4. Method according to claim 3, **characterized in that** the time interval between the first point in time and the second point in time is between 50 and 500 nanoseconds long, in particular 200 nanoseconds.

5. LIDAR measuring system (10), comprising a LIDAR transmitting unit (12) with emitter elements (20) and a LIDAR receiving unit (14) with sensor elements (22), as well as a control element (29) for controlling the temporally correct activation and deactivation of sensor elements (22) or readout cells (50) during a measuring process, wherein the LIDAR measuring system (10) is configured for carrying out the method according to claims 1 to 4.

## Revendications

1. Procédé pour améliorer la détection à courte et longue distance d'une unité de réception LIDAR (16),
- dans lequel plusieurs éléments émetteurs (20) d'une unité d'émission (12) émettent des impulsions laser,
- l'unité de réception (16) comportant plusieurs éléments capteurs (22),
- les éléments capteurs (22) étant organisés en macrocellules (32),
- chaque macrocellule (32) comportant plusieurs éléments capteurs (22),
- les éléments capteurs (22) des macrocellules (32) pouvant être activés et désactivés directement ou indirectement,
- dans lequel, à un premier moment dans un cycle de mesure respectif par rapport à une impulsion laser d'un élément émetteur, au moins une partie des éléments capteurs (22) d'une macrocellule correspondante (32) et donc la macrocellule (32) sont activés,
- à un deuxième moment dans le cycle de mesure, qui se situe après le premier moment, un ou plusieurs éléments capteurs de chaque macrocellule active (32) sont activés et/ou un ou plusieurs éléments capteurs de la macrocellule active (32) sont désactivés,
**caractérisé en ce que**
l'unité d'émission (22) et l'unité de réception (16) sont disposées chacune dans une configuration en réseau focal plan,
les macrocellules (32) étant chacune associées à un élément émetteur (20) d'une unité d'émission (12), de sorte que tous les éléments capteurs (22) d'une macrocellule (32) sont associés au même élément émetteur (20),
chaque lumière laser susceptible d'arriver effectuant, par rapport à chaque macrocellule active (32), un déplacement sur l'unité de réception (16) pendant la durée du cycle de mesure correspondant, les éléments capteurs respectifs (22) de chaque macrocellule active (32) formant une zone active et étant activés et/ou désactivés de telle sorte que la zone active respective de la macrocellule respective (32) suit ce déplacement.

2. Procédé selon la revendication 1, **caractérisé en ce que** l'intervalle de temps entre le premier moment et le deuxième moment est compris entre 50 et 500 nanosecondes, en particulier 200 nanosecondes.

3. Procédé pour améliorer la détection à courte et longue distance sur une unité de réception LIDAR (10),
- dans lequel plusieurs éléments émetteurs (20) d'une unité d'émission (12) émettent des impulsions laser,
- l'unité de réception (16) comportant plusieurs éléments capteurs (22),
- les éléments capteurs (22) étant organisés en macrocellules (32),
- chaque macrocellule (32) comportant plusieurs éléments capteurs (22),
- chaque macrocellule (32) comportant au moins une première cellule de lecture (50a) et une deuxième cellule de lecture (50b),
- la première cellule de lecture (50a) comportant au moins un premier élément capteur (22a) qui est relié à un premier élément de lecture (28a) et
- la deuxième cellule de lecture (50b) comportant au moins un deuxième élément capteur (22b) qui est relié à un deuxième élément de lecture (28b),
- à un premier moment dans un cycle de mesure respectif, au moins une partie des cellules de lecture est activée sur chaque macrocellule active (32),
- à un deuxième moment dans le cycle de mesure, qui est postérieur au premier moment, une cellule de lecture est activée et/ou une cellule de lecture est désactivée,
- l'unité d'émission (22) et l'unité de réception (16) étant disposées dans une configuration en réseau focal plan,
- les macrocellules (32) étant chacune associées à un élément émetteur (20) d'une unité d'émission (12), de sorte que tous les éléments capteurs (22) d'une macrocellule (32) sont associés au même élément émetteur (20),
chaque lumière laser potentiellement incidente sur chaque macrocellule active (32) effectuant un déplacement sur l'unité de réception (16) pendant la durée du cycle de mesure correspondant, les cellules de lecture respectives (50) de chaque macrocellule active (32) formant une zone active respective et étant activées et/ou désactivées de telle sorte que la zone active de la macrocellule respective (32) suit ce déplacement.

4. Procédé selon la revendication 3, **caractérisé en ce que** l'intervalle de temps entre le premier moment et le deuxième moment est compris entre 50 et 500 nanosecondes, en particulier 200 nanosecondes.

5. Système de mesure LIDAR (10) comprenant une unité d'émission LIDAR (12) avec des éléments émetteurs (20) et une unité de réception LIDAR (14) avec des éléments capteurs (22), ainsi qu'un élément de commande (29) pour commander l'activation et la désactivation synchronisées des éléments capteurs (22) ou des cellules de lecture (50) lors d'un processus de mesure, le système de mesure LIDAR (10) étant équipé pour mettre en œuvre le procédé selon les revendications 1 à 4.
